# EUROPÄISCHE PATENTSCHRIFT

(11) **EP 0 837 270 B1**
(45) Veröffentlichungstag und Bekanntmachung des Hinweises auf die Patenterteilung: **11.12.2002**
(21) Anmeldenummer: 97117140.0
(22) Anmeldetag: 02.10.1997
(51) Int. Cl.: F16J 15/32

(54) **Radialwellendichtring mit PTFE-Dichtlippe und Verfahren sowie Vorrichtung zu dessen Herstellung**
Radial lip seal with PTFE seal lips, its production device and method
Joint à lèvre radiale comportant une lèvre en PTFE, procédé et dispositif de fabrication

(30) Priorität: 15.10.1996 DE 19642544
(43) Veröffentlichungstag der Anmeldung: 22.04.1998
(73) Patentinhaber: Dichtungstechnik G. Bruss GmbH & Co. KG, D-22955 Hoisdorf (DE)
(72) Erfinder: Johnen, Rolf, 22955 Hoisdorf (DE); Dunse, Siegfried, 22929 Kasseburg (DE)
(74) Vertreter: Liesegang, Roland, Dr.-Ing.

(56) Entgegenhaltungen:
- DE-A- 3 309 538
- DE-A- 4 307 964
- US-A- 4 957 680
- US-A- 5 209 502

## Beschreibung

Die Erfindung betrifft einen Radialwellendichtring mit Gummisitz und mit PTFE-Dichtlippe (PTFE = Polytetrafluorethylen), die über eine elastomere Zwischenschicht an einen metallenen Versteifungsring angebunden ist, sowie ein Verfahren und eine Vorrichtung zur Herstellung eines solchen Radialwellendichtringes.

Es ist ein Radialwellendichtring (RWDR) dieser Art aus der DE 33 09 538 C2 bekannt. Dabei hat die elastomere Zwischenschicht eine Dicke von wenigstens 0,5 mm und eine radiale Erstreckung von dem 3- bis 7-fachen dieser Dicke.

Ein bevorzugter Dickenbereich liegt zwischen 0,9 bis 1,4 mm. Die Zwischenschicht kann mit der PTFE-Dichtlippe entweder verklebt oder im Zuge eines unmittelbaren Anformungsvorganges erzeugt und durch Vulkanisation an den Versteifungsring angebunden sein. Im übrigen ist über die Herstellung eines solchen Radialwellendichtringes nichts ausgesagt. Üblicher synthetischer Gummi, wie er entsprechend den Einsatzbedingungen einer statischen Abdichtung am Außendurchmesser eines RWDR und aus Gründen einer wirtschaftlichen Fertigung in der Regel eingesetzt wird, hat eine ungleiche chemische Beständigkeit im Vergleich zu PTFE, was im Betrieb zu Problemen beispielsweise der Haftung und damit der Dichtheit führen kann.

Ein Verfahren zur Herstellung eines ähnlichen Wellendichtrings ist aus der EP 0 213 988 B1 bekannt. Hier wird zum Begrenzen des Gummiflusses aus dem Formhohlraum des Werkzeuges eine Nase am Werkzeug eingesetzt, welche sich beim Fertigungsvorgang in die PTFE-Dichtscheibe eindrückt und diese schwächt, so daß die Biegelinie der PTFE-Dichtscheibe einen Knick erhält. Das Oberteil der Form drückt direkt auf dem Metall des Versteifungsringes ab, um auch an dieser Stelle während des Einspritzens von Gummi zum Bilden der Zwischenschicht einen Gummifluß aus dem Hohlraum des Werkzeuges zu verhindern. Die hierzu am Formoberteil vorgesehene Abdrücknase bedingt einen radialen Abstand zwischen dem Außendurchmesser der PTFE-Scheibe und dem Innendurchmesser des Versteifungsringes, was zu einer insbesondere in radialer Richtung großen Bauweise führt.

Es ist schließlich ein Radialwellendichtring mit PTFE-Dichtlippe aus der US-PS 5,198,053 bekannt, bei der die PTFE-Dichtlippe direkt über eine Zwischenschicht aus thermoplastischem FEP (fluoriertes Ethylenpropylen) angebunden ist. Die Dicke dieser Zwischenschicht soll in der Praxis zwischen 0,254 mm und 0,127 mm betragen. Durch Erwärmen auf mindestens 377°C schmilzt das PTFE an der Oberfläche an und wird über die schmelzflüssig gewordene Zwischenschicht aus FEP an den metallischen Versteifungsring angeklebt. Bei einer so hohen Temperatur wird jedoch eine Gummi-Metallbindung zerstört, so daß sich nach diesem Verfahren keine Radialwellendichtringe mit Elastomersitz, das heißt mit vollständig oder teilweise gummiertem Außendurchmesser, wirtschaftlich herstellen lassen.

Der Erfindung liegt die Aufgabe zugrunde, einen Wellendichtring mit Elastomersitz sowie ein Verfahren und eine Vorrichtung zu dessen Herstellung anzugeben, wobei eine Fertigung in besonders kleinen Abmessungen, insbesondere in axialer Richtung bei hoher Qualität der Anbindung der Dichtlippe an dem metallenen Versteifungsring und bei geringem Fertigungsaufwand ermöglicht werden soll.

Ein diese Anforderungen erfüllender Radialwellendichtring gemäß der Erfindung ist in Patentanspruch 1 angegeben.

Ein Verfahren und eine Vorrichtung zur Herstellung eines solchen Radialwellendichtringes sind in den Ansprüchen 10 und 15 angegeben.

Vorteilhafte Ausgestaltungen des Radialwellendichtringes sowie des Verfahrens und der Vorrichtung sind in den jeweiligen Unteransprüchen angegeben.

Ein Radialwellendichtring nach der Erfindung weist die folgenden Vorteile auf:
1. Der Radialwellendichtring mit PTFE-Dichtlippe ist von einfachem, kostengünstigen Aufbau und für kleinste, inbesondere im Automobilbau vorkommende Einbauräume geeignet.
2. Die PTFE-Dichtlippe ist nicht durch Abdrücknasen des Formwerkzeuges geschwächt, so daß eine Biegelinie mit Knick an einer Schwachstelle der PTFE-Dichtlippe vermieden ist.
3. Der Konstrukteur kann am Außendurchmesser des Radialwellendichtringe freizügig gestalten.
4. Es besteht die Möglichkeit, einen vollständigen oder partiellen Elastomersitz am Außendurchmesser aus einem kostengünstigen Elastomer mit einer Shore-Härte im Bereich von 50 bis 90, insbesondere aus eienm ACM- oder AEM-Gummi oder einem NBR-, HNBR oder MVQ-Gummi herzustellen.
5. Es besteht die Möglichkeit, eine zusätzliche Schutzlippe aus einem gleichen oder anderen PTFE-Compound als die Dichtlippe vorzusehen.
6. Die PTFE-Dichtlippe ist an dem metallenen Versteifungsring über eine dünne elastomere Zwischenschicht angebunden, die von dem am Versteifungsring vorgesehenen Elastomersitz räumlich derart getrennt ist, daß die beiden unterschiedlichen Elastomere bei der herstellungsbedingten Erhitzen zur Vulkanisierung nicht ineinanderfließen können.
7. Die Zwischenschicht besteht aus einem Elastomer einer mit PTFE vergleichbaren chemischen Beständigkeit. Der Elastomer der Zwischenschicht ist vorteilhaft ein an sich bekannter Fluorkautschuk (FPM).
8. Die elastomere Zwischenschicht hat eine kleine definierte Dicke von weniger als 0,5 mm, vorzugsweise zwischen 0,05 und 0,15 mm. Das Verhältnis der Dicke der Zwischenschicht zur radialen Breite kann problemlos auf Werte von über 20 gebracht werden und trotzdem die Fertigung von Wellendichtringen für sehr kleine Einbauräume ermöglichen, die deutlich kleiner als die nach DIN 3760/ISO6194 genormten Einbauräume sind.
9. Die Verbindung der PTFE-Dichtscheibe mit dem Versteifungsring über die Zwischenschicht und das Aufbringen eines Elastomersitzes am Außendurchmesser des Versteifungsringes und/oder das Anbringen von statischen Dichtelementen kann in einem Arbeitsgang erfolgen.

Die Erfindung ist im folgenden anhand schematischer Zeichnungen an Ausführungsbeispielen mit weiteren Einzelheiten näher erläutert. Es zeigen:
- Fig. 1 und 2: Profilquerschnitte durch Radialwellendichtringe gemäß der Erfindung in zwei unterschiedlichen Ausführungen;
- Fig. 3: eine Form zum Herstellen eines Radialwellendichtringes gemäß der Erfindung in geschlossenem Zustand nach Beendigen des Einspritzvorganges von Gummi für einen Gummisitz;
- Fig. 4: einen Radialwellendichtring gemäß der Erfindung in dem aus der Form nach Fig. 3 entnommenen Zustand.

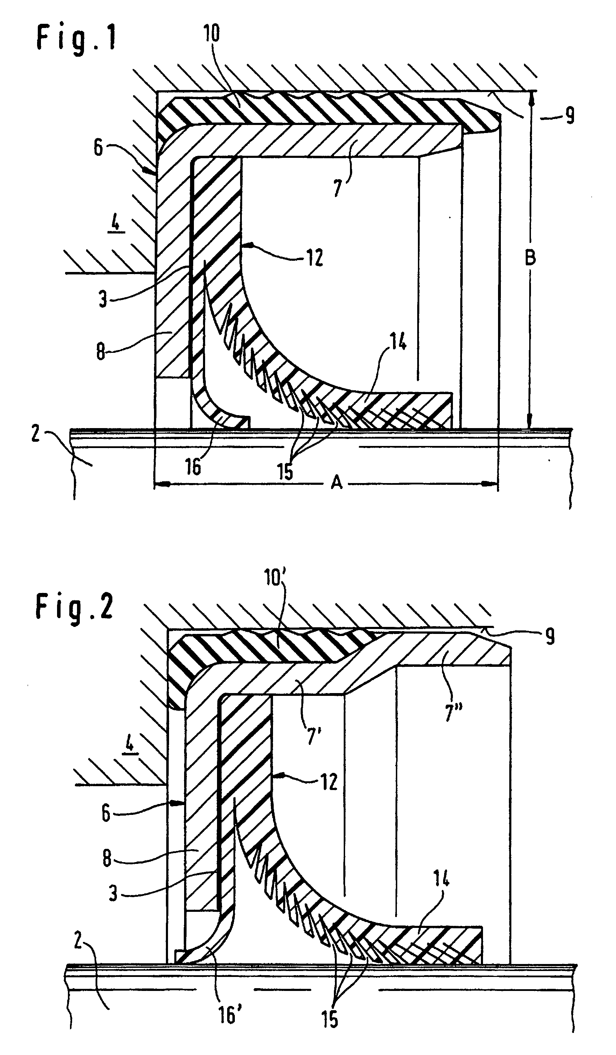

Der in Fig. 1 gezeigte Profilquerschnitt durch eine erste Ausführung eines Radialwellendichtringes nach der Erfindung zeigt diesen Radialwellendichtring in einem durch die Masse A und B definierten Einbauraum zwischen einer bei 2 angedeuteten Welle und einer bei 4 angedeuteten Nabe. Bei einem realisierten Radialwellendichtring betragen B = 7,9 mm und A = 7 mm. Eine weitere Reduzierung auf B-Werte von 4,5 mm und A-Werte von 5 mm erscheint problemlos möglich.

Zum Radialwellendichtring gehört ein metallener Versteifungsring 6 mit einem Axialflansch 7 und einem Radialflansch 8. Auf dem Axialflansch 7 ist ein Gummi- oder Elastomersitz 10 zum Einpassen in die Bohrung 9 der Nabe 4 anvulkanisiert. Dieser Elastomersitz 10 erstreckt sich über die Länge des Axialflansches 7 hinaus. Das Elastomermaterial des Elastomersitzes 10 ist vorzugsweise ein ACM- oder AEM-Gummi. Es kann alternativ auch ein Gummi auf der Basis NBR, HNBR oder MVQ eingesetzt werden. Solche Gummis haben gute statische Dichteigenschaften und ermöglichen eine wirtschaftliche Fertigung.

An die Innenseite des Radialflansches 8 ist über eine Zwischenschicht 3 aus Fluor-Kautschuk (FPM) einer definierten Dicke von weniger als 0,5 mm eine Dichtscheibe 12 mit einer Dichtlippe 14 und einer Schutzlippe 16 aus einem Stück gefertigt. Die durch radiales Spalten der Dichtscheibe erzeugte Dichtlippe 14 und Schutzlippe 16 sind bei dieser Ausführung in gleicher Richtung gebogen. Die schrägen Einschnitte 15 auf der der Welle 2 zugewandten Seite der Dichtlippe erzeugen einen für die Dichtfunktion erforderlichen Rückförderdrall.

Gestalt und Fertigung einer solchen Dichtscheibe mit Dichtlippe und Schutzlippe sind bekannt und deshalb hier nicht näher beschrieben. Es ist jedoch auch möglich, eine einstückige Dichtscheibe mit Dichtlippe und Schutzlippe aus zwei verschiedenen PTFE-Compounds zu fertigen, so daß der Werkstoff für die Dichtlippe den Bedingungen des Laufes bei Ölschmierung und der Werkstoff der Schutzlippe den Bedingungen des Trockenlaufes angepaßt werden können.

Der Radialwellendichtring nach Fig. 2 unterscheidet sich von demjenigen nach Fig. 1 in zweierlei Hinsicht:

Der Axialflansch 7 des metallenen Versteifungsringes 6 ist gekröpft, wobei zwei Teilabschnitte 7' und 7" gebildet sind. Nur am radial weiter innenliegenden Teilabschnitt 7' ist ein Elastomersitz 10' zum Einpassen in die Bohrung 9 der Nabe 4 vorgesehen.

Ein weiterer Unterschied besteht darin, daß die Schutzlippe 16' gegensinnig zur Dichtlippe 14 in eingebautem Zustand abgebogen ist.

Im übrigen ist der Aufbau gleich wie derjenige des Radialwellendichtringes nach Fig. 1 und nicht nochmals beschrieben.

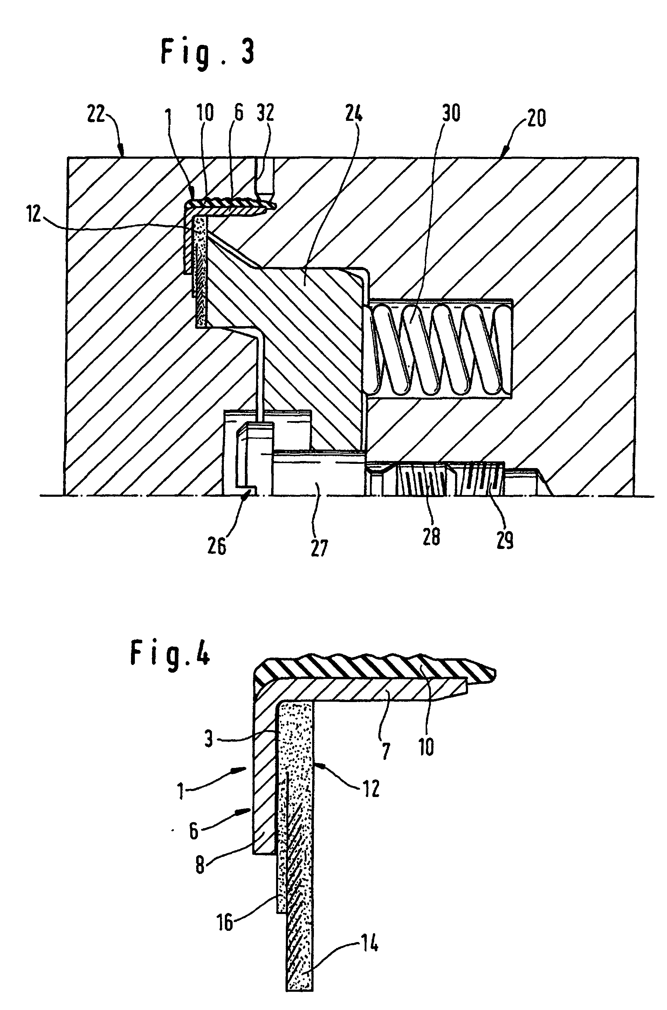

Fig. 3 zeigt ein Formwerkzeug zum Herstellen eines Radialwellendichtringes gemäß den Fig. 1 und 2.

Die gezeigte Form hat eine obere Formhälfte 20 und eine untere Formhälfte 22. In der oberen Formhälfte 20 ist ein Formkern 24 verschieblich geführt. Zur Führung dient eine Schraube 26 mit Paßbund 27, die mit einem Gewindeabschnitt 28 in ein Gewindesackloch 29 der oberen Formhälfte 20 eingeschraubt ist. Der Formkern 24 wird von einer oder mehreren Federn 30 in Richtung parallel zur Achse 29 der Schraube 26 gegen einen Formhohlraum in der unteren Formhälfte 22 gedrückt und drückt dabei auf die Anordnung aus Dichtscheibe 12 und metallenem Versteifungsring 6, die in den Formhohlraum eingelegt ist.

Mit 32 ist eine Einspritzbohrung zum Einspritzen von Gummi zum Bilden des Gummisitzes 10 bezeichnet. Die Form ist in Fig. 3 in geschlossenem Zustand nach vorgenommener Einspritzung über die Einspritzbohrung 32 dargestellt, und das fertiggestellte Teil gemäß Fig. 4 kann nach dem Abkühlen aus der Form herausgenommen werden. Beim Einbauen in den Einbauraum werden dann die Dichtlippe 14 und die Schutzlippe 16 entweder gemäß Fig. 1 oder gemäß Fig. 2 abgebogen, wobei die Abbiegung der Schutzlippe 16 gemäß Fig. 1 als "überdeckend" bezeichnet wird.

Bei dem beschriebenen Formwerkzeug wirkt aufgrund der Federbelastung des Kerns 24 mit einer oder mehreren Federn 30 stets eine konstante Kraft und somit konstante Flächenpressung auf die Anordnung aus Dichtscheibe 12 und Versteifungsring 6. Wegen der Andrückung der radialen Fläche der oberen Formhälfte 20 an die Dichtscheibe 12 und der entsprechenden Anpressung des Versteifungsringes an die Radialfläche der unteren Formhälfte 22 ist vermieden, daß über die Einspritzbohrung 32 eingespritztes Elastomer für den Elastomersitz in den Bereich der Dichtscheibe bzw. der äußeren Radialfläche des Radialflansches 8 des Versteifungsringes 6 gelangen kann. Damit wird der hohe, durch das Einspritzen des Gummis erzeugte Forminnendruck völlig von diesen Stellen ferngehalten, so daß eine durch die Federkraft der Feder 30 vorgegebene, vergleichsweise niedrige Kraft in Axialrichtung wirksam ist. Hierdurch werden schädliche Deformationen der PTFE-Dichtscheibe 12 während des Herstellvorganges vermieden. Auch wird vermieden, daß die Stärke der Zwischenschicht 3 unkontrollierbar verändert wird. Somit kann die gewünschte geringe Stärke der Zwischenschicht definiert eingehalten werden, insbesondere in der Größenordnung von weniger als 0,3 mm, vorzugsweise zwischen 0,05 mm und 0,15 mm. Hierdurch vulkanisiert die Zwischenschicht innerhalb kürzester Zeit in der beheizten unteren Formhälfte 22 aus. Eine weitere Folge dieser Konstruktion des Formwerkzeuges ist es, das praktisch kein überschüssiges Material aus der Zwischenschicht 3 bzw. aus dem Formhohlraum für den Elastomersitz 10 ausgetrieben wird.

Der rohrförmige Rohling aus PTFE (Polytetrafluorethylen) zur Herstellung der Dichtscheibe 12 kann anstatt aus einem einzigen Rohr aus verschiedenen, ineinander gesteckten Rohren aus unterschiedlich formulierten PTFE-Compounds gebildet sein, die durch Sintern unlösbar miteinander verbunden sein können. Dadurch läßt sich eine Optimierung des Dichtheitsund Verschleißverhaltens des PTFE-Werkstoffes erzielen, weil der auf der Welle 2 aufliegende Teil der Dichtlippe 14 aus einem speziell für die Laufbedingungen bei Ölschmierung formulierten PTFE-Compound und die Schutzlippe 16 aus einem speziell für die Bedingungen von Trockenlauf geeigneten PTFE-Compound erzeugt sein können.

Nachfolgend ist unter Bezugnahme auf Fig. 3 die Abfolge der Verfahrensschritte beim Herstellen eines Radialwellendichtringes 1 erläutert.
(1) Zunächst wird in bekannter Weise eine Dichtscheibe 12 aus einem oder zwei unterschiedlichen PTFE-Compounds hergestellt.
(2) Die Dichtscheibe 12 wird auf der vorzugsweise mit einer Schutzlippe 16 versehenen Seite angeätzt.
(3) Auf die angeätzte Seite wird ein Haftvermittler aufgebracht.
(4) Es wird eine vorbereitete Fluor-Kautschuklösung auf die angeätzte, mit dem Haftvermittler versehene Seite im Siebdruckverfahren oder als "Raupe" dosiert aufgebracht, wobei in diesem letzteren Falle-die Fluor-Kautschuklösung mit größerer Viskosität vorbereitet wird.
(5) Die Dichtscheibe 12 wird gegen die Innenseite des Radialflansches 8 des Versteifungsringes 6 angelegt, und die so gebildete Anordnung wird in den Formhohlraum der aufgeheizten unteren Formhälfte 22 des Formwerkzeuges eingelegt.
(6) Das Formwerkzeug wird geschlossen.
(7) In die geschlossene Form wird Gummi zum Bilden des Gummisitzes 10 eingespritzt.
(8) Die Fluor-Kautschuklösung wird zur Bildung einer haftenden Zwischenschicht 3 zwischen Dichtscheibe 12 und Radialflansch 8 des Versteifungsringes 6 gleichzeitig mit dem Vulkanisieren des zum Bilden des Elastomersitzes 10 eingespritzten Gummis vulkanisiert, wobei die Vulkanisationszeit wegen der geringen Dicke der Zwischenschicht 3 durch die zum Vulkanisieren des Elastomersitzes 10 erforderliche Zeitdauer bestimmt ist.
(9) Das Werkzeug wird geöffnet, und der Radialwellendichtring gemäß Fig. 4 wird entnommen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Radialwellendichtring mit Elastomersitz (10, 10') aus einem ersten Elastomer mit guten statischen Dichteigenschaften und PTFE-Dichtlippe (14), die über eine elastomere Zwischenschicht (3) an einen metallenen Versteifungsring (6) angebunden ist, **dadurch gekennzeichnet, daß** die elastomere Zwischenschicht (3) aus einem zweiten Elastomer von mit PTFE vergleichbarer chemischer Beständigkeit besteht und eine Dicke von weniger als 0,5 mm aufweist, und daß der Elastomersitz (10, 10') und die Zwischenschicht (3) so gestaltet und voneinander entfernt angeordnet sind, daß die unterschiedlichen Elastomere bei der Herstellung des Radialwellendichtrings durch Vulkanisierung nicht ineinanderfließen können.

2. Radialwellendichtring nach Anspruch 1, **dadurch gekennzeichnet, daß** der Elastomersitz (10, 10') im wesentlichen radial außerhalb eines Axialflansches (7, 7') des Versteifungsringes (6) gelegen ist.

3. Radialwellendichtring nach Anspruch 1 oder 2, **dadurch gekennzeichnet, daß** die Zwischenschicht (3) aus einem Fluor-Kautschuk, insbesondere aus FPM - Kautschuk besteht.

4. Radialwellendichtring nach einem der Ansprüche 1 bis 3, **dadurch gekennzeichnet, daß** die Dicke der Zwischenschicht weniger als 0,3 mm beträgt, insbesondere zwischen 0,05 mm und 0,15 mm liegt.

5. Radialwellendichtring nach einem der Ansprüche 1 bis 4, **dadurch gekennzeichnet, daß** er eine PTFE-Schutzlippe (16, 16') aufweist, die insbesondere einteilig mit der Dichtlippe (14, 14') an einer Dichtscheibe (12) aus einem PTFE-Compound ausgebildet ist.

6. Radialwellendichtring nach Anspruch 5, **dadurch gekennzeichnet, daß** die Zwischenschicht (3) zwischen der Schutzlippe (16, 16') und dem Versteifungsring (6) vorgesehen ist.

7. Radialwellendichtring nach einem der Ansprüche 1 bis 6, **dadurch gekennzeichnet, daß** der Elastomer des Elastomersitzes eine Shore-Härte im Bereich von 50 bis 90, insbesondere im Bereich von 65 bis 70, aufweist.

8. Radialwellendichtring nach einem der Ansprüche 1 bis 7, **dadurch gekennzeichnet, daß** der Elastomer des Elastomersitzes ein ACM-Gummi oder AEM-Gummi ist.

9. Radialwellendichtring nach einem der Ansprüche 1 bis 7, **dadurch gekennzeichnet, daß** der Elastomer des Elastomersitzes ein Gummi auf der Basis NBR, HNBR oder MVQ ist.

10. Verfahren zum Herstellen eines Radialwellendichtringes mit Elastomersitz (10, 10') und PTFE-Dichtlippe (14, 14'), die über eine elastomere Zwischenschicht (3) an einen metallenen Versteifungsring (6) anvulkanisiert wird, **dadurch gekennzeichnet, daß** ein Elastomer mit einer chemischen Beständigkeit ähnlich derjenigen von PTFE auf eine Fläche einer mit dem Versteifungsring (6) zu verbindenden Dichtscheibe (12) aus PTFE aufgebracht wird,
daß die Anordnung aus Versteifungsring und Dichtscheibe mit dem Elastomer als Zwischenschicht (3) in eine Spritzform (20, 22) zum Formen eines Elastomersitzes (10, 10') eingelegt wird,
daß ein Elastomer mit guten statischen Dichteigenschaften in die Spritzform von der Außenseite des Versteifungsringes her eingespritzt wird und
daß die Zwischenschicht sowie der Elastomersitz gleichzeitig in der geschlossenen Form vulkanisiert werden,
wobei ein solcher Abstand zwischen einem Formhohlraum für den Elastomersitz (10, 10') und einem Spalt für die Zwischenschicht (3) eingehalten wird, daß ein Ineinanderfließen des Elastomers für den Elastomersitz und des Elastomers für die Zwischenschicht (3) vermieden ist.

11. Verfahren nach Anspruch 10, **dadurch gekennzeichnet, daß** die Dichtscheibe (12) auf der mit einem Radialflansch (8) des Versteifungsringes (6) zu verbindenden Seite angeätzt wird, daß ein Haftvermittler auf die angeätzte Seite aufgebracht wird, daß der Elastomer für die Zwischenschicht auf den Haftvermittler aufgebracht wird, daß die Anordnung aus Versteifungsring (6) und Dichtscheibe (12) mit dem Elastomer als Zwischenschicht (3) in eine erhitzte Spritzformhälfte (22) eingelegt werden, daß die so geformte Anordnung aus Dichtscheibe (12), Versteifungsring (6) und Zwischenschicht (3) nach dem Schließen der Form mit konstanter Flächenpressung gegen die genannte Spritzformhälfte (22) angedrückt wird, und daß der Elastomer zum Bilden des Elastomersitzes (10, 10') in einen nahezu vollständig radial außerhalb eines Axialflansches (7, 7') des Versteifungsringes (6) gelegenen Formhohlraum der geschlossenen Form eingespritzt wird, wobei der beim Spritzen erzeugte Forminnendruck von der Dichtscheibe (12) ferngehalten wird.

12. Verfahren nach Anspruch 11, **dadurch gekennzeichnet, daß** die konstante Flächenpressung beim Schließen der Form durch Federkraft aufgebracht wird.

13. Verfahren nach Anspruch 11 oder 12, **dadurch gekennzeichnet, daß** eine Lösung aus dem Elastomer für die Zwischenschicht auf die mit dem Haftvermittler versehene Seite der Zwischenschicht (12) aufgebracht wird.

14. Verfahren nach einem der Ansprüche 11 bis 13, **dadurch gekennzeichnet, daß** der Elastomer für die Zwischenschicht (3) im Siebdruckverfahren oder als dosierte Raupe auf die mit dem Haftvermittler versehene Seite der Dichtscheibe (12) aufgebracht wird.

15. Vorrichtung zum Durchführen eines Verfahrens nach einem der Ansprüche 10 bis 14, **dadurch gekennzeichnet, daß** eine erste Formhälfte (22) zur Aufnahme der Anordnung aus Dichtscheibe (12) und Versteifungsring (6) und eine zweite Formhälfte (20) so gestaltet sind, daß sie bei geschlossener Form mit eingelegter Anordnung aus Dichtscheibe (12) und Versteifungsring (6) einen radial außerhalb des Versteifungsringes (6) gelegenen, von den Radialflächen der Anordnung druckisolierten Formhohlraum bilden, in den ein Einspritzkanal (32) zum Einspritzen des Elastomers für den Elastomersitz (10, 10') mündet.

16. Vorrichtung nach Anspruch 15, **dadurch gekennzeichnet, daß** der zweiten Formhälfte (20) ein Formkern (24) zugeordnet ist, der auf einem mit der zweiten Formhälfte verbundenen Führungsteil (26) verschieblich geführt und von einer Feder (30) in Verschieberichtung gegen die genannte Anordnung (12, 16) beaufschlagbar ist, wobei das Führungsteil eine mit der zweiten Formhälfte (20) verschraubte Schraube (26) mit Paßbund (27) sein kann, auf welchem der Formkern (24) gleitbar geführt ist.

## Claims

1. A rotary shaft seal having an elastomer seat (10, 10') consisting of a first elastomer with favorable static sealing properties and a PTFE seal lip (14), attached to a metal enforcement ring (6) through an elastomer intermediate layer (3), **characterized in that** the elastomer intermediate layer (3) consists of a second elastomer of a chemical endurance comparable to PTFE and has a thickness of less than 0.5 mm, and **in that** the elastomer seat (10, 10') and the intermediate layer (3) are designed and distant from one another such that the different elastomers cannot blend during manufacture of the rotary shaft seal by vulcanizing.

2. A rotary shaft seal according to claim 1, **characterized in that** the elastomer seat (10, 10') is arranged substantially radially outside an axial flange (7, 7') of the enforcement ring (6).

3. A rotary shaft seal according to claim 1 or 2, **characterized in that** the intermediate layer (3) consists of a fluorocaoutchouc, in particular of FPM-caoutchouc.

4. A rotary shaft seal according to one of claims 1 to 3, **characterized in that** the thickness of the intermediate layer is less than 0.3 mm, in particular between 0.05 mm and 0.15 mm.

5. A rotary shaft seal according to one of claims 1 to 4, **characterized in that** it comprises a PTFE protective lip (16, 16'), which particularly is formed integrally with the sealing lip (14, 14') on a seal washer (12) made of a PTFE compound.

6. A rotary shaft seal according to claim 5, **characterized in that** the intermediate layer (3) is provided between the protective lip (16, 16') and the enforcement ring (6).

7. A rotary shaft seal according to one of claims 1 to 6, **characterized in that** the elastomer of the elastomer seat has a Shore hardness of 50 to 90, in particular of 65 to 70.

8. A rotary shaft seal according to one of claims 1 to 7, **characterized in that** the elastomer of the elastomer seat is an ACM or AEM rubber.

9. A rotary shaft seal according to one of claims 1 to 7, **characterized in that** the elastomer of the elastomer seat is a NBR-, HNBR- or MVQ-based rubber.

10. A method of manufacturing a rotary shaft seal with an elastomer seat (10, 10') and a PTFE seal lip (14, 14'), which is vulcanized to a metal enforcement ring (6) through an elastomer intermediate layer (3), **characterized in**
**that** an elastomer with a chemical endurance similar to that of PTFE is applied onto a surface of a seal washer (12) of PTFE to be connected to the enforcement ring (6),
**that** the arrangement of enforcement ring and seal washer with the elastomer as an intermediate layer (3) is inserted into an injection mold (20, 22) for forming an elastomer seat (10, 10'),
**that** an elastomer with favorable static sealing properties is injected into the injection mold from the outer side of the enforcement ring,
**that** the intermediate layer as well as the elastomer seat are vulcanized simultaneously in the closed mold,
wherein such a distance is kept between a form cavity for the elastomer seat (10, 10') and a gap for the intermediate layer (3) that a blending of the elastomer for the elastomer seat and the elastomer for the intermediate layer (3) is avoided.

11. A method according to claim 10, **characterized in that** the seal washer (12) is etched on the side to be connected to the radial flange (8) of the enforcement ring (6), that a bonding agent is applied on the etched side, that the elastomer for the intermediate layer is applied onto the bonding agent, that the arrangement of the enforcement ring (6) and seal washer (12) with the elastomer as an intermediate layer (3) is inserted into a heated injection mold half (22), that the arrangement of seal washer (12), enforcement ring (6) and intermediate layer (3) formed in this manner is pressed after closing the mold at constant surface pressure against said injection mold half (22), and that the elastomer for forming the elastomer seat (10, 10') is injected into a mold cavity of the closed mold located almost completely radially outside an axial flange (7, 7') of the enforcement ring (6), wherein the internal pressure generated during the injection process in the form is kept away from the seal washer (12).

12. A method according to claim 11, **characterized in that** the constant surface pressure is exerted by spring force when closing the mold.

13. A method according to claim 11 or 12, **characterized in that** a solution of the elastomer for the intermediate layer is applied onto the side of the intermediate layer (12) provided with the bonding agent.

14. A method according to one of claims 11 to 13, **characterized in that** the elastomer for the intermediate layer is applied during a serigraphy process or as a dosed caterpillar onto the side of the seal washer (12) provided with the bonding agent.

15. An apparatus for performing a method of one of claims 10 to 14, **characterized in that** a first mold half (22) for receiving the arrangement of seal washer (12) and enforcement ring (6) and a second mold half (20) are designed such that they form a mold cavity located radially outside of the enforcement ring (6), pressure-insulated from the radial surfaces of the arrangement when the form is closed including the inserted arrangement of seal washer (12) and enforcement ring (6) with an injection channel (32) for injecting the elastomer for the elastomer seat (10, 10') opening into the mold cavity.

16. An apparatus according to claim 15, **characterized in that** a mold core (24) is assigned to the second mold half (20), said mold core being guided displaceably on a guide member (26) connected to the second mold half and being loadable by a spring (30) in displacement direction against said arrangement (12, 16), wherein the guide member is a screw (26) having a fit collar screwed together with the second mold half (20), the mold core (24) being slidably guided on said fit collar.

## Revendications

1. Bague à lèvres avec ressort avec assise en élastomère (10, 10') en un premier élastomère avec de bonnes propriétés d'étanchéité statique et une lèvre d'étanchéité en PTFE (14), qui est reliée par une couche intermédiaire en élastomère (3) à un frettage métallique (6), **caractérisé en ce que** la couche intermédiaire en élastomère (3) consiste en un deuxième élastomère de résistance chimique comparable au PTFE et présente une épaisseur de moins de 0,5 mm, et **en ce que** l'assise en élastomère (10, 10') et la couche intermédiaire (3) sont agencés et disposés séparés l'un de l'autre de sorte que les élastomères différents ne peuvent pas s'écouler l'un dans l'autre lors de la préparation de la bague à lèvres avec ressort par vulcanisation.

2. Bague à lèvres avec ressort selon la revendication 1, **caractérisée en ce que** l'assise en élastomère (10, 10') est disposée de manière essentiellement radiale, à l'extérieur d'un collet axial (7, 7') du frettage (6).

3. Bague à lèvres avec ressort selon la revendication 1 ou 2, **caractérisée en ce que** la couche intermédiaire (3) consiste en un caoutchouc au fluor, en particulier en caoutchouc FPM.

4. Bague à lèvres avec ressort selon l'une des revendications 1 à 3, **caractérisée en ce que** l'épaisseur de la couche intermédiaire s'élève à moins de 0,3 mm, en particulier entre 0,05 mm et 0,15 mm.

5. Bague à lèvres avec ressort selon l'une des revendications 1 à 4, **caractérisée en ce qu'**elle présente une lèvre de protection en PTFE (16, 16'), qui est formée en particulier d'une pièce, avec la lèvre d'étanchéité (14, 14') sur un disque d'étanchéité (12) en un mélange de PTFE.

6. Bague à lèvres avec ressort selon la revendication 5, **caractérisée en ce que** la couche intermédiaire (3) est prévue entre la lèvre de protection (16, 16') et le frettage (6).

7. Bague à lèvres avec ressort selon l'une des revendications 1 à 6, **caractérisée en ce que** l'élastomère de l'assise en élastomère présente une dureté Shore située dans l'intervalle allant de 50 à 90, en particulier de 65 à 70.

8. Bague à lèvres avec ressort selon l'une des revendications 1 à 7, **caractérisée en ce que** l'élastomère de l'assise en élastomère est un caoutchouc ACM ou un caoutchouc AEM.

9. Bague à lèvres avec ressort selon l'une des revendications 1 à 7, **caractérisée en ce que** l'élastomère de l'assise en élastomère est un caoutchouc à base de NBR, de HNBR ou de MVQ.

10. Procédé de préparation d'une bague à lèvres avec ressort avec assise en élastomère (10, 10') et lèvre de protection en PTFE (14, 14'), qui est vulcanisé par une couche intermédiaire en élastomère (3) sur un frettage métallique (6), **caractérisé en ce qu'**un élastomère avec une résistance chimique similaire à celle du PTFE est appliqué sur une face d'un disque d'étanchéité (12) relié au frettage (6),
**en ce que** la disposition sur du frettage et du disque d'étanchéité est introduite avec l'élastomère comme couche intermédiaire (3) dans un moule pour injection (20, 22) pour mouler une assise en élastomère (10, 10'),
**en ce qu'**un élastomère avec de bonnes propriétés d'étanchéité statique est injecté dans le moule pour injection sur la face externe du frettage, et
**en ce que** le couche intermédiaire ainsi que l'assise en élastomère sont simultanément vulcanisées dans le moule fermé,
où on maintient une distance entre un espace vide du moule pour l'assise élastomère (10, 10') et une fente pour la couche intermédiaire (3), de sorte qu'un écoulement l'un dans l'autre de l'élastomère de l'assise en élastomère et de l'élastomère de la couche intermédiaire (3) est évité.

11. Procédé selon la revendication 10, **caractérisé en ce que** le disque d'étanchéité (12) est corrodé sur la face à lier à un collet radial (8) du frettage (6), **en ce qu'**un auxiliaire d'adhésion est disposé sur la face corrodée, **en ce que** la disposition sur du frettage (6) et du disque d'étanchéité (12) est introduite avec l'élastomère comme couche intermédiaire (3) dans un demi-moule pour injection (22) chauffé, **en ce que** la disposition ainsi formée du disque d'étanchéité (12), du frettage (6) et de la couche intermédiaire (3) est compressée après la fermeture du moule, avec une pression surfacique constante contre le demi-moule pour injection indiqué (22), et **en ce que** l'élastomère pour former l'assise en élastomère (10, 10') est injecté dans un espace vide du moule fermé, disposé de manière presque complètement radiale à l'extérieur d'un collet axial (7, 7') du frettage (6), où la pression interne dans le moule, formée lors de l'injection est écartée du disque d'étanchéité (12).

12. Procédé selon la revendication 11, **caractérisé en ce que** la pression surfacique constante est appliquée par la force d'un ressort lors de la fermeture du moule.

13. Procédé selon la revendication 11 ou 12, **caractérisé en ce qu'**une solution de l'élastomère pour la couche intermédiaire est appliquée sur la face du disque d'étanchéité (12) munie de l'auxiliaire d'adhérence.

14. Procédé selon l'une des revendications 11 à 13, **caractérisé en ce que** l'élastomère pour la couche intermédiaire (3) est appliqué dans un procédé à haute pression ou comme un cordon dosé sur la face munie de l'auxiliaire d'adhérence du disque d'étanchéité (12).

15. Dispositif pour réaliser un procédé selon l'une des revendications 10 à 14, **caractérisé en ce que** l'on dispose un premier demi-moule (22) pour la réception de la disposition du disque d'étanchéité (12) et du frettage (6) et un deuxième demi-moule (20), de sorte que l'on forme, le moule fermé, avec la disposition du disque d'étanchéité (12) et du frettage (6), un espace vide du moule disposé de manière radiale externe au frettage (6), isolé en pression du collet radial de la disposition, dans lequel un canal d'injection (32) s'ouvre pour l'injection de l'élastomère de l'assise en élastomère (10, 10').

16. Dispositif selon la revendication 15, **caractérisé en ce que** le deuxième demi-moule (20) est associé à un coeur de moule (24), qui est conduit de manière mobile, sur une partie de conduite (26) reliée au deuxième demi-moule et qui peut être muni d'un ressort (30) en direction du déplacement opposé à ladite disposition (12, 16), moyennant quoi la partie de conduite peut être une vis (26) fixée par vissage au deuxième demi-moule (20) avec un collet d'ajustage (27), sur lequel le coeur de moule (24) est conduit par glissement.
